# EUROPEAN PATENT SPECIFICATION

(11) **EP 3 900 952 B1**
(45) Date of publication and mention of the grant of the patent: **30.08.2023**
(21) Application number: 19901303.8
(22) Date of filing: 16.07.2019
(51) Int. Cl.: B60C 5/00, B60C 19/00

(54) **PNEUMATIC TIRE**
LUFTREIFEN
PNEUMATIQUE

(30) Priority: 17.12.2018 JP 2018235694
(43) Date of publication of application: 27.10.2021
(73) Proprietor: BRIDGESTONE CORPORATION, Chuo-ku Tokyo 104-8340 (JP)
(72) Inventor: ISHIHARA Taiga, Tokyo 104-8340 (JP)
(74) Representative: Marks & Clerk LLP
(86) International application number: PCT/JP2019/027925
(87) International publication number: WO 2020/129289

(56) References cited:
- WO-A1-2018/025853
- JP-A- 2007 022 445
- JP-A- 2011 025 832
- JP-A- 2013 043 643
- JP-A- 2017 154 543
- JP-A- 2017 154 543
- JP-A- 2018 158 714
- US-A1- 2018 319 224

## Description

### TECHNICAL FIELD

The present invention relates to a pneumatic tire.

### BACKGROUND

The generally employed pneumatic tire has been configured to have a sound absorbing member applied to an inner surface of the tire for the purpose of improving quietness by reducing noise generated during traveling. The use of nonwoven fabric for producing the sound absorbing member has been proposed (for example, PTL 1).

### CITATION LIST

### Patent Literature

PTL 1: Japanese Patent Laid-Open No. 2016-210250. Attention is also drawn to the disclosures of JP2017 154543 and US 2018/319224.

### SUMMARY

### (Technical Problem)

In some cases, however, especially during high-speed traveling, the volume of the nonwoven fabric is reduced under centrifugal force, failing to secure sufficient quietness.

It is an object of the present disclosure to provide the pneumatic tire having improved quietness during traveling.

### (Solution to Problem)

The pneumatic tire according to the present 2. invention as claimed in independent claim 1 provides a solution to the above problem. Further embodiments of the invention are laid down in the dependent claims.

### (Advantageous Effect)

The present invention ensures to provide the pneumatic tire with improved quietness during traveling.

### BRIEF DESCRIPTION OF THE DRAWINGS

In the accompanying drawings:
FIG. 1 is a sectional view of a pneumatic tire in a tire width direction according to an embodiment of the present invention;
FIG. 2 illustrates a cross section of a fiber suitably used for a nonwoven fabric of the pneumatic tire according to the present invention;
FIG. 3A is a schematic plan view of a generally employed sound absorbing member made of a single layered nonwoven fabric;
FIG. 3B is a schematic sectional view of a sound absorbing member which is formed by laminating two or more sound absorbing layers each made of nonwoven fabric for constituting the pneumatic tire according to a non-claimed example;
FIG. 4A is a plan view of an example of the sound absorbing member having cut portions according to the present invention when seen from a tire cavity side;
FIG. 4B is a plan view of an example of the sound absorbing member having cut portions according to the present invention when seen from the tire cavity side;
FIG. 4C is a plan view of an example of the sound absorbing member having cut portions according to the present invention when seen from the tire cavity side;
FIG. 4D is a plan view of an example of the sound absorbing member having cut portions according to the present invention when seen from the tire cavity side;
FIG. 4E is a plan view of an example of the sound absorbing member having cut portions according to the present invention when seen from the tire cavity side;
FIG. 4F is a plan view of a non-claimed example of the sound absorbing member having cut portions for use in a tire when seen from the tire cavity side;
FIG. 4G is a plan view of a non-claimed example of the sound absorbing member having cut portions for use in a tire when seen from the tire cavity side;
FIG. 5A is a sectional view of an example of the sound absorbing member having cut portions according to the present invention;
FIG. 5B is a sectional view of an example of the sound absorbing member having cut portions according to the present invention;
FIG. 5C is a sectional view of an example of the sound absorbing member having cut portions according to the present invention;
FIG. 5D is a sectional view of an example of the sound absorbing member having cut portions according to the present invention; and
FIG. 5E is a sectional view of an example of the sound absorbing member having cut portions according to the present invention.

### DETAILED DESCRIPTION

An embodiment of the present invention will be described as an exemplified case in detail referring to the drawings.

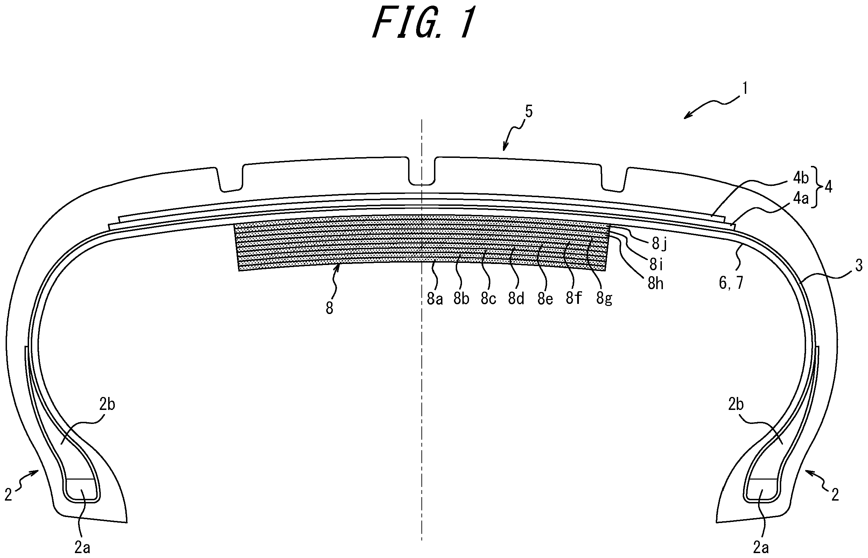

FIG. 1 is a sectional view of a pneumatic tire in a tire width direction according to an embodiment of the present invention.

As FIG. 1 illustrates, a pneumatic tire 1 of the embodiment (hereinafter simply referred to as tire) includes a pair of bead portions 2, a pair of side wall portions connected to the bead portions, and a tread portion 5 connected to the side wall portions. The tire 1 includes a belt 4 and a tread rubber sequentially at an outer side of a crown portion of a carcass 3 in a tire radial direction, which toroidally extends between bead cores 2a buried in the pair of bead portions 2.

As FIG. 1 illustrates, in the embodiment, bead fillers 2b each having a substantially triangular shaped cross section in the illustrated example are further disposed at outer sides of the bead cores 2a, respectively in the tire radial direction. In the present disclosure, the bead portion 2 allows its bead core 2a and the bead filler 2b to have arbitrary known cross-section shapes, sizes, or materials in a nonrestrictive manner. The tire may also be configured without using the bead cores 2a nor the bead fillers 2b.

In the embodiment, the carcass 3 is formed as a single carcass ply made of organic fibers. In the present disclosure, the number of the carcass plies, and the material for constituting the carcass 3 are not specifically limited.

In the embodiment, the belt 4 includes two belt layers 4a, 4b having cords (in this example, steel cord) crossing between layers. In the present example, the belt is arbitrarily configured without limiting in terms of the material for forming the cord, the cord count, the slant angle, the number of belt layers, and the like.

It is possible to employ an arbitrary known rubber material for forming the tread portion 5.

As FIG. 1 illustrates, the tire 1 of the embodiment has a sound absorbing member 8 applied to a tire inner surface 6 (in the embodiment, to the inside from an inner liner 7 applied to the tire inner surface). In the embodiment, at least a part (in the drawing, entire part) of the sound absorbing member 8 is applied to the inner side of the tread portion 5 in the tire radial direction. In this example, the sound absorbing member 8 is continuously applied to the tire circumference in the tire circumferential direction.

As FIG. 1 illustrates, the sound absorbing member 8 is formed by laminating sound absorbing layers 8a to 8j (in the illustrated example, ten layers) each made of nonwoven fabric in the tire radial direction in the illustrated example.

In the embodiment, each thickness of the sound absorbing layers 8a to 8j is in a range from 10 µm to 2 mm (in this example, from 0.1 mm to 0.4 mm inclusive).

The nonwoven fabric used for forming the sound absorbing member 8 (sound absorbing layers 8a to 8j) is made of either organic fibers or inorganic fibers. Examples of the organic fiber include rayon, polyethylene terephthalate, polyethylene naphthalate, polybenzimidazole, polyphenylene sulfide, polyvinyl alcohol, aliphatic polyamide, aromatic polyamide (aramid), aromatic polyimide, and the like. Examples of the inorganic fiber include a carbon fiber, fluorine fiber, glass fiber, metal fiber, and the like. Two or more different kinds of fibers may be mixed for forming the nonwoven fabric.

The length and diameter of the fiber for forming the nonwoven fabric may be arbitrarily determined. Although not specifically limited, the diameter of the fiber may be in the range from 100 nm to 200 µm, for example.

Preferably, the nonwoven fabric has its basis weight in the range from 10 g/m² to 300 g/m². Setting of the basis weight to 10 g/m² or more makes the fiber more uniform. Meanwhile, setting of the basis weight to 300 g/m² prevents excessive increase in the weight as a result of providing the sound absorbing member 8.

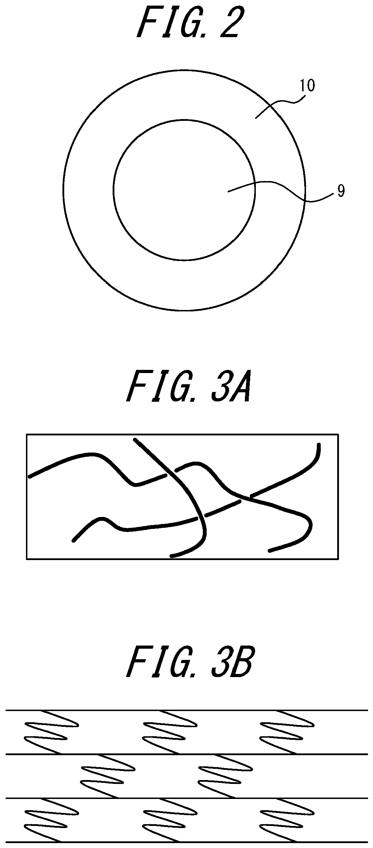

FIG. 2 illustrates a cross-section of the fiber suitably used for the nonwoven fabric of the pneumatic tire according to the present invention.

Preferably, in the present disclosure, the fiber of the nonwoven fabric used for producing the sound absorbing member (sound absorbing layer) includes a core with a circular cross-section (core 9 as illustrated by FIG. 2), and a sheath with an annular cross-section (sheath 10 as illustrated by FIG. 2), which is made of the material with melting point lower than that of the material for forming the core, and surrounds the outer circumference of the core. Specifically, in a preferred example, the core is made of polypropylene, and the sheath is made of polyethylene. In this case, as the sheath has the melting point lower than that of the core, the core and the sheath may be bonded together through heat sealing. In this case, preferably, the volume of the core is substantially the same as that of the sheath. Although not specifically limited, the fiber core diameter may be set to be in the range from 45 nm to 95 µm, for example, and the diameter of the fiber as a whole may be set to be in the range from 100 nm to 200 µm.

In the disclosure, the nonwoven fabric may be manufactured from the web through execution of the heat sealing, carding process, papermaking process, airlaid process, melt-blow, spunbond process, water-flow interlacing process, needle-punch process, and the like.

In the present disclosure, preferably, the web with its thickness ranging from 10 µm to 2 mm is folded back repeatedly while being heated until the desired number of layers are obtained so that the respective layers are fused through the heat sealing.

In the embodiment, as the inner liner 7 is applied to an innermost surface of the tire, the bladder expanded in the vulcanizing process presses the sound absorbing member 8 against the adhesive inner liner 7 so that the sound absorbing member 8 and the inner liner 7 are bonded together. Meanwhile, the sound absorbing member 8 may be bonded to the tire inner surface 6 (the inner surface of the inner liner 7 in use) via an adhesion layer.

In the present disclosure, it is preferable to laminate the sound absorbing layers 8a to 8j through heat sealing as described above. It is possible to allow the hot-melt adhesive to be intervened between the respective layers.

Effects of the pneumatic tire of the embodiment will be described. FIG. 3A is a schematic plan view of the generally employed sound absorbing member made of the single layered nonwoven fabric. FIG. 3B is a schematic sectional view of the sound absorbing member formed by laminating two or more sound absorbing layers each made of nonwoven fabric used for the pneumatic tire according to a non-claimed example. In the example, the sound absorbing member 8 is applied to the tire inner surface 6 (in the example, inner surface of the inner liner 7). Accordingly, vibrational energy of filled gas, which has been generated accompanied with cavity resonance in the tire cavity is converted into the internal vibrational energy inside the sound absorbing member 8 so that such energy is consumed as thermal energy. This makes it possible to reduce the cavity resonance noise.

Generally, as FIG. 3A schematically illustrates, the nonwoven fabric has its fibers randomly oriented in various directions. Meanwhile, in the embodiment as illustrated by FIG. 1, in the sound absorbing member 8, two or more sound absorbing layers 8a to 8j (ten layers in the example of FIG. 1) each made of nonwoven fabric are laminated in the tire radial direction. Each thickness of the sound absorbing layers 8a to 8j is 2 mm or smaller. Referring to FIG. 3B schematically indicating that the fiber binding is cut on the interface between the layers, compared with the single layered sound absorbing member with the same thickness (total thickness) of the sound absorbing layers 8a to 8j, for example, in the sound absorbing member 8 of the embodiment, the number of bindings between fibers is reduced as they are cut on the interface between layers in the laminating direction of sound absorbing layers (in the example of FIG. 1, tire radial direction). Referring to FIG. 3B, each straight line extending in the left-right direction on the drawing schematically represents each of the sound absorbing layers. Each zigzag-like extending line in the up-down direction on the drawing schematically represents fibers for binding the respective sound absorbing layers.

Accordingly, even if a large centrifugal force is applied to the sound absorbing member 8 during traveling, especially high-speed traveling, the number of bindings between fibers in the laminating direction of sound absorbing layers (in the example of FIG. 1, tire radial direction) is small so as to suppress the deformed state of the sound absorbing member 8 from being made rigid and fixed as a result of heated bindings between fibers in the laminating direction of sound absorbing layers (in the example of FIG. 1, tire radial direction).

Even in the case where the large centrifugal force is applied to the sound absorbing member 8 to be deformed for reducing its volume, the volume of the sound absorbing member 8 may be restored in the earlier stage to exhibit its sound absorbing performance effectively. It is therefore possible to improve quietness during traveling.

As described above, the pneumatic tire of the embodiment ensures to improve quietness during traveling.

Preferably, the pneumatic tire of the present invention is having at least a part of the sound absorbing member applied to the inner side of the tread portion in the tire radial direction.

In the foregoing configuration to which a large centrifugal force is likely to be applied, the tire is capable of restoring the volume of the sound absorbing member effectively to allow improvement in quietness during traveling effectively.

The sound absorbing member of the pneumatic tire of the present invention is formed by a laminate of 10 to 200 sound absorbing layers each having the thickness ranging from 10 µm to 2 mm.

Setting each thickness of the sound absorbing layers to 2 mm or smaller makes it possible to enhance restoring force of the sound absorbing member by lessening the binding between fibers in the laminating direction of sound absorbing layers. Laminating 10 or more layers secures the volume of the sound absorbing member so as to further improve quietness during traveling. From a viewpoint of manufacturing, it is preferable to set each thickness of the sound absorbing layers to 10 µm or larger. Laminating 200 sound absorbing layers or fewer, each of which has the thickness in the foregoing range makes it possible to prevent excessive increase in the weight of the tire.

Setting the thickness to be in the above-described range allows further improvement of quietness during traveling without excessively increasing the weight of the tire.

For the similar reason, in the present disclosure, it is preferable to form the sound absorbing member by laminating 20 to 100 sound absorbing layers each having the thickness ranging from 50 µm to 500 µm. It is more preferable to form the sound absorbing member by laminating 30 to 80 sound absorbing layers each having the thickness ranging from 100 µm to 400 µm.

Preferably, the sound absorbing member of the pneumatic tire of the present disclosure has a binding amount between the sound absorbing layers smaller than the one in the plane of the sound absorbing layer. Even if a large centrifugal force is applied to the sound absorbing member 8, the number of bindings between fibers in the laminating direction of sound absorbing layers (in the example of FIG. 1, tire radial direction) is small so as to suppress the deformed state of the sound absorbing member 8 from being made rigid and fixed as a result of heated bindings between fibers in the laminating direction of sound absorbing layers (in the example of FIG. 1, tire radial direction) further effectively.

Preferably, for example, a contact area Sr of the fiber per unit length of the sound absorbing member in the laminating direction of sound absorbing layers (equivalent to the unit width in the tire width direction) is smaller than a contact area Sw of the fiber per unit width of the sound absorbing member in its width direction.

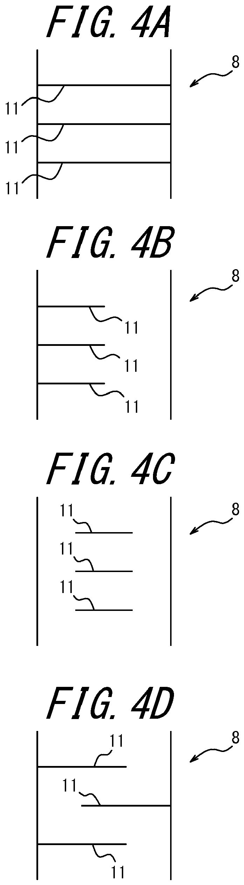

FIG. 4A to FIG. 4G are plan views of each example of the sound absorbing members with cut portions for use in the present disclosure when seen from the tire cavity side. In those examples, the sound absorbing member includes one or more cut portions.

In the examples as illustrated by FIG. 4A to FIG. 4E, the sound absorbing member 8 has one or more cut portions 11 extending in the width direction (direction orthogonal to the circumferential direction) of the sound absorbing member 8 (in the example of FIG. 1, tire width direction).

In the example of FIG. 4A, the sound absorbing member 8 has three cut portions 11 in the illustrated range. Each of the cut portions 11 extends across the full width of the sound absorbing member 8 (in the example of FIG. 1, tire width direction).

In the example of FIG. 4B, the sound absorbing member 8 has three cut portions 11 in the illustrated range. Each of the cut portions 11 extends from one end of the sound absorbing member 8 in the width direction (in the example of FIG. 1, tire width direction), and terminates in the middle of the sound absorbing member 8 (in the illustrated example, around the center of the sound absorbing member 8 in the width direction).

In the example of FIG. 4C, the sound absorbing member 8 has three cut portions 11 in the illustrated range. Each of the cut portions 11 extends along the width direction (in the example of FIG. 1, tire width direction) of the sound absorbing member 8 while having both ends terminated in the middle of the sound absorbing member 8.

In the example of FIG. 4D, the sound absorbing member 8 has three cut portions 11 in the illustrated range. There are first and second cut portions 11 alternately formed in the circumferential direction (in the example of FIG. 1, tire circumferential direction). The first cut portion extends from one end of the sound absorbing member 8 in the width direction toward one side in the width direction (in the example of FIG. 1, tire width direction), and terminates in the middle of the sound absorbing member 8 (in the illustrated example, passing through the center of the sound absorbing member 8 in the width direction). The second cut portion extends from the other end of the sound absorbing member 8 toward the other side in the width direction (in the example of FIG. 1, tire width direction), and terminates in the middle of the sound absorbing member 8 (in the illustrated example, passing through the center of the sound absorbing member 8 in the width direction). In the illustrated example, the first and the second cut portions extend in the width direction so that they are overlaid upon projection in the circumferential direction. Alternatively, the first and the second cut portions may be formed not to be overlaid upon projection in the circumferential direction.

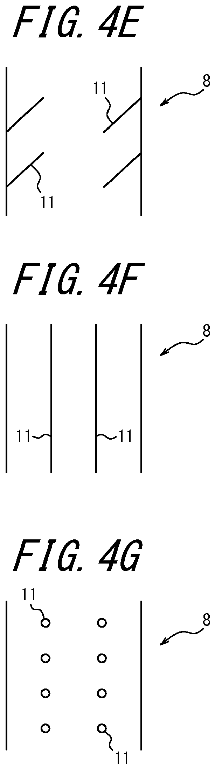

In the example of FIG. 4E, the sound absorbing member 8 includes four cut portions 11 in the illustrated range. There are two third cut portions 11 and two fourth cut portions 11. Each of the third cut portions 11 slantly extends to the width direction of the sound absorbing member 8 (in the example of FIG. 1, tire width direction) from one end of the sound absorbing member 8 in the width direction toward one side in the tire width direction, and terminates in the middle of the sound absorbing member 8 (in the illustrated example, without passing through the center of the sound absorbing member 8 in the width direction). Each of the fourth cut portions 11 slantly extends to the width direction from the other end of the sound absorbing member 8 in the width direction toward the other side in the width direction of the sound absorbing member 8 (in the example of FIG. 1, tire width direction), and terminates in the middle of the sound absorbing member 8 (in the illustrated example, without passing through the center of the sound absorbing member 8 in the width direction). In the illustrated example, the third and the fourth cut portions extend in the width direction so as not to be overlaid upon projection in the circumferential direction (in the example of FIG. 1, tire circumferential direction). Alternatively, the third and the fourth cut portions may be formed so as to be overlaid upon projection in the circumferential direction.

In the example of FIG. 4F, the sound absorbing member 8 includes two cut portions 11 in the illustrated range. Each of the cut portions 11 is formed on the tire circumference while continuously extending along the tire circumferential direction. In the example of FIG. 4F, the cut portions 11 extend in the tire circumferential direction without slanting. Alternatively, the cut portions 11 may be formed to slantly extend in the tire circumferential direction.

In the example of FIG. 4G, the sound absorbing member 8 includes eight small holes as the cut portions 11 in the illustrated range. The linear cut portions 11 as illustrated in FIGS. 4A and 4B may be replaced with linearly arrayed multiple small holes.

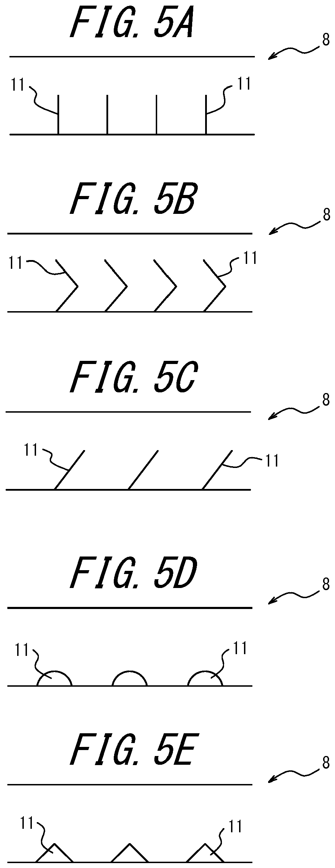

FIG. 5A to FIG. 5E are sectional views of examples of the sound absorbing member with cut portions for use in the present invention.

As FIG. 5A to FIG. 5E illustrate, one or more cut portions extend from an inner surface of the sound absorbing member at the inner side in the tire radial direction toward a tire outer surface side.

In the example of FIG. 5A, four cut portions 11 are formed in the illustrated range, each extending from the inner surface of the sound absorbing member toward the tire outer surface side without slanting in the laminating direction of sound absorbing layers (in the example of FIG. 1, tire radial direction) to terminate in the middle of the sound absorbing member 8 (in the illustrated example, around the center of the sound absorbing member 8 in the thickness direction).

In the example of FIG. 5B, four cut portions 11 are formed in the illustrated range, each extending from the inner surface of the sound absorbing member toward the tire outer surface side while being bent to terminate in the middle of the sound absorbing member 8. In the illustrated example, the cut portion has a single bent portion. However, the cut portion may be formed to have two or more bent portions.

In the example of FIG. 5C, three cut portions 11 are formed in the illustrated range, each extending from the inner surface of the sound absorbing member toward the tire outer surface side while slanting to the laminating direction of sound absorbing layers (in the example of FIG. 1, tire radial direction) to terminate in the middle of the sound absorbing member 8.

In any one of the examples as illustrated in FIG. 4A to FIG. 4F and modifications thereof, the cross-section of the cut portion 11 in the direction orthogonal to its extending direction may be formed, for example, corresponding to any one of those illustrated in FIG. 5A to FIG. 5C, or modifications thereof.

In the example of FIG. 5D, each of the cut portions 11 in the form of small holes extends from the inner surface of the sound absorbing member toward the tire outer surface side to terminate in the middle of the sound absorbing member 8. The cross-section of the cut portion has a substantially semicircular shape.

In the example of FIG. 5E, each of the cut portions 11 in the form of small holes extends from the inner surface of the sound absorbing member toward the tire outer surface side to terminate in the middle of the sound absorbing member 8. The cross-section of the cut portion has a triangular shape with its width increased from the inner surface of the sound absorbing member toward the tire outer surface side.

In any one of the examples as illustrated in FIG. 4G and a modification thereof, the cross-section of the cut portion 11 in the direction orthogonal to its extending direction may be formed, for example, corresponding to the one illustrated in any one of FIG. 5D and FIG. 5E, or modifications thereof.

Referring to FIGS. 4A to 4E, and 5A to 5C, in the present invention, preferably, the sound absorbing member includes one or more cut portions extending in the width direction of the sound absorbing member. Preferably, the one or more cut portions extend from the inner surface of the sound absorbing member toward the tire outer surface side. This allows the cut portions to absorb deformation of the sound absorbing member for suppressing generation of wrinkles of the sound absorbing member.

Referring to FIG. 5A to FIG. 5E, in the present invention, preferably, the one or more cut portions extend from the inner surface of the sound absorbing member toward the tire outer surface side to terminate in the middle of the sound absorbing member. This will suppress deformation of the sound absorbing member itself so as to effectively suppress generation of wrinkles of the sound absorbing member.

In the present invention, preferably, the sound absorbing member has one or more reforming portions (for example, folds) on its inner surface, which extend in the width direction of the sound absorbing member. This ensures to suppress generation of wrinkles of the sound absorbing member as well. The respective positions of the reforming portions may be determined, for example, corresponding to those of the cut portions as illustrated by FIG. 4A to FIG. 4E.

Although not specifically limited, the cut portion and the reforming portion may be formed with the blade (including the metal plate with no cutting edge) or the like, for example.

The embodiment of the present invention has been described. It is to be understood that the present invention is not limited to the embodiment as described above, and it is defined by the appended claims. The width and thickness of the sound absorbing member in the width direction may be changed appropriately. In the above-described example, the sound absorbing member is continuously applied to the tire circumference. However, it may be applied intermittently, for example, to one or more sections on the tire circumference. In such a case, the above-described effect may be obtained under conditions that the sound absorbing member is formed by laminating two or more sound absorbing layers each made of nonwoven fabric at an arbitrary section on the tire circumference, and each thickness of the sound absorbing layers is equal to or smaller than 2 mm. A plurality of divided parts of the sound absorbing member may be applied separately in the width direction (in the example of FIG. 1, tire width direction). In such a case, the above-described effect may be obtained under conditions that the sound absorbing member is formed by laminating two or more sound absorbing layers each made of nonwoven fabric at an arbitrary section of the divided parts in the width direction, and each thickness of the sound absorbing layers is equal to or smaller than 2 mm. Alternatively, the above-described effect may be obtained even in the case where two or more sound absorbing layers each made of nonwoven fabric are laminated only at one section of the single sound absorbing member in the width direction, and each thickness of the sound absorbing layers is equal to or smaller than 2 mm. In such a case, the section and the other section may be bonded together using the adhesive layer or the like.

The number of the cut portions or the reforming portions to be formed may be appropriately changed. The respective planar shapes or the like of the cut portions or the reforming portions are not limited to those illustrated by FIG. 4A to FIG. 4G, but may be suitably changed as well as the extending direction and the extension length. The cross-section of the cut portion is not limited to those illustrated by FIG. 5A to FIG. 5E, but may be suitably changed as well as the extending direction and the extension length.

### REFERENCE SIGNS LIST

- 1: pneumatic tire
- 2: bead portion
- 2a: bead core
- 2b: bead filler
- 3: carcass
- 4: belt
- 5: tread portion
- 6: tire inner surface
- 7: inner liner
- 8: sound absorbing member (nonwoven fabric)
- 8a- 8j: sound absorbing layer (nonwoven fabric)
- 9: core
- 10: sheath
- 11: cut portion

## Claims

1. A pneumatic tire (1) having a sound absorbing member (8) applied to a tire inner surface (6), wherein:
the sound absorbing member (8) is formed by a laminate of sound absorbing layers (8a-8j) each made of a nonwoven fabric and having a thickness ranging from 10 µm to 2 mm,
**characterized in that**:
the sound absorbing member (8) is formed by a laminate of 10 to 200 sound absorbing layers.

2. The pneumatic tire (1) according to claim 1, wherein
the tire includes a tread portion (5); and
at least a part of the sound absorbing member (8) is applied to an inner side of the tread portion (5) in a tire radial direction

3. The pneumatic tire (1) according to claim 1 or 2, wherein
the sound absorbing member (8) includes one or more cut portions (11) each extending in a tire width direction of the sound absorbing member (8); and
the one or more cut portions (11) extend from a radially inner surface of the sound absorbing member (8) toward a tire outer surface side.

4. The pneumatic tire (1) according to claim 3, wherein the one or more cut portions (11) extend from the radially inner surface of the sound absorbing member (8) toward the tire outer surface side, and terminate in the middle of the sound absorbing member (8).

5. The pneumatic tire (1) according to any one of claims 1 to 4, wherein the sound absorbing member (8) has one or more folds on a radially inner surface of the sound absorbing member (8), each extending in a tire width direction of the sound absorbing member (8).

## Patentansprüche

1. Luftreifen (1), der ein schallabsorbierendes Element (8) aufweist, das auf eine Reifeninnenfläche (6) aufgebracht ist, wobei:
das schallabsorbierende Element (8) durch einen Schichtstoff aus schallabsorbierenden Lagen (8a-8j) gebildet ist, die jeweils aus einem Vliesstoff bestehen und eine Dicke aufweisen, die von 10 µm bis 2 mm reicht,
**dadurch gekennzeichnet, dass**:
das schallabsorbierende Element (8) durch einen Schichtstoff aus 10 bis 200 schallabsorbierenden Lagen gebildet ist.

2. Luftreifen (1) nach Anspruch 1, wobei:
der Reifen einen Laufflächenabschnitt (5) einschließt; und
mindestens ein Teil des schallabsorbierenden Elements (8) in einer Reifenradialrichtung auf eine Innenseite des Laufflächenabschnitts (5) aufgebracht ist.

3. Luftreifen (1) nach Anspruch 1 oder 2, wobei:
das schallabsorbierende Element (8) einen oder mehrere ausgeschnittene Abschnitte (11) einschließt, die sich jeweils in einer Reifenbreitenrichtung des schallabsorbierenden Elements (8) erstrecken; und
sich der eine oder die mehreren ausgeschnittenen Abschnitte (11) von einer in Radialrichtung inneren Fläche des schallabsorbierenden Elements (8) hin zu einer Reifenaußenflächenseite erstrecken.

4. Luftreifen (1) nach Anspruch 3, wobei sich der eine oder die mehreren ausgeschnittenen Abschnitte (11) von der in Radialrichtung inneren Fläche des schallabsorbierenden Elements (8) hin zu der Reifenaußenflächenseite erstrecken und in der Mitte des schallabsorbierenden Elements (8) enden.

5. Luftreifen (1) nach einem der Ansprüche 1 bis 4, wobei das schallabsorbierende Element (8) eine oder mehrere Falten auf einer in Radialrichtung inneren Fläche des schallabsorbierenden Elements (8) aufweist, die sich jeweils in einer Reifenbreitenrichtung des schallabsorbierenden Elements (8) erstrecken.

## Revendications

1. Pneumatique (1) comportant un élément d'absorption de bruit (8) appliqué sur une surface interne du pneumatique (6), dans lequel :
l'élément d'absorption de bruit (8) est formé par un stratifié de couches d'absorption de bruit (8a-8j), chacune constituée d'un tissu non tissé et ayant une épaisseur comprise entre 10 µm et 2 mm,
**caractérisé en ce que** :
l'élément d'absorption de bruit (8) est formé par un stratifié de 10 à 200 couches d'absorption de bruit.

2. Pneumatique (1) selon la revendication 1, dans lequel :
le pneumatique inclut une partie de bande de roulement (5) ; et
au moins une partie de l'élément d'absorption de bruit (8) est appliquée sur un côté interne de la partie de bande de roulement (5), dans une direction radiale du pneumatique.

3. Pneumatique (1) selon les revendications 1 ou 2, dans lequel :
l'élément d'absorption de bruit (8) inclut une ou plusieurs parties découpées (11), s'étendant chacune dans une direction de la largeur du pneumatique par rapport à l'élément d'absorption de bruit (8) ; et
l'une ou les plusieurs parties découpées (11) s'étendent d'une surface radialement interne de l'élément d'absorption de bruit (8) vers un côté de la surface externe du pneumatique.

4. Pneumatique (1) selon la revendication 3, dans lequel l'une ou les plusieurs parties découpées (11) s'étendent de la surface radialement interne de l'élément d'absorption de bruit (8) vers le côté de la surface externe du pneumatique, et se terminent au milieu de l'élément d'absorption de bruit (8).

5. Pneumatique (1) selon l'une quelconque des revendications 1 à 4, dans lequel l'élément d'absorption de bruit (8) comporte un ou plusieurs plis sur une surface radialement interne de l'élément d'absorption de bruit (8), s'étendant chacun dans une direction de la largeur du pneumatique par rapport à l'élément d'absorption de bruit (8).
